# DEMANDE DE BREVET EUROPEEN

(11) **EP 2 680 201 A1**
(43) Date de publication de la demande: **01.01.2014**
(21) Numéro de dépôt: 13174193.6
(22) Date de dépôt: 28.06.2013
(51) Int. Cl.: G06Q 20/02, G06Q 20/38

(54) **Procédé et dispositif de communication entre un terminal et une machine d'enregistrement**

(30) Priorité: 28.06.2012 FR 1256164
(71) Demandeur: Morel, Bruno, 35150 Amanlis (FR); Darmon, Raphael, 35131 Chartres de Bretagne (FR)
(72) Inventeur: Darmon, Raphaël, 35131 CHARTRES DE BRETAGNE (FR); Morel, Bruno, 35130 AMANLIS (FR)
(74) Mandataire: Regimbeau

(57) **Abrégé**

L'invention concerne un procédé de communication par un réseau de télécommunication entre au moins un terminal de télécommunication d'au moins un utilisateur et une machine d'enregistrement, le terminal émettant une requête d'enregistrement.

Suivant l'invention, N requêtes de plusieurs terminaux différents sont envoyées à un serveur intermédiaire comportant un module de regroupement des sélections (SEL) des N requêtes dans un message de groupe (P) comprenant :
- N champs (CH4) contenant la sélection (SEL1) contenue dans les N requêtes,
- N cinquièmes champs (CH5) contenant l'identifiant (ID1) contenu dans les N requêtes,
- un champ (CH6) contenant une valeur (VAL3) de somme d'argent égale à N fois une deuxième valeur prescrite.

## Description

L'invention concerne un procédé de communication par au moins un réseau de télécommunication entre au moins un terminal de télécommunication et une machine d'enregistrement, le terminal émettant au moins une requête contenant une sélection de nombres parmi un ensemble prédéterminé et fini de nombres et un identifiant de terminal et/ou de personne et/ou de requête, la machine effectuant une opération d'enregistrement de la sélection contenue dans la requête sur réception d'un message de paiement contenant l'identifiant.

L'invention concerne toute opération de sélection mise en oeuvre en ligne, c'est-à-dire par le réseau de télécommunication et en temps réel.

Dans ce genre d'opération, il faut que le terminal ait déclenché une opération de paiement en ligne pour que sa requête ou commande soit enregistrée et prise en compte.

De nombreuses exigences sont imposées à ces opérations en ligne.

L'anonymat de toute personne envoyant une requête doit être préservé vis-à-vis des autres.

Les opérations de paiement doivent avoir une sécurité suffisante.

Ceci conduit à des requêtes individuelles envoyées à la machine depuis les terminaux.

Pour l'exploitant de la machine, il est souhaitable de recevoir le plus possible de requêtes, synonyme de beaucoup de paiements reçus, sans engorger l'interface de réception de requêtes de cette machine.

L'invention vise à obtenir un procédé de communication alliant ces impératifs contradictoires et permettant un fonctionnement ergonomique tant pour les terminaux des utilisateurs que pour l'exploitant de la machine d'enregistrement des requêtes.

A cet effet, un premier objet de l'invention est un procédé de communication par au moins un réseau de télécommunication entre au moins un terminal de télécommunication d'au moins un utilisateur et une machine d'enregistrement, le terminal émettant au moins une requête d'enregistrement d'une information devant être sélectionnée et associée à l'utilisateur en présence d'un paiement,

chaque requête comprenant :
- un premier champ contenant une sélection de combinaisons de caractères alphanumériques parmi un ensemble prédéterminé et fini de combinaisons de caractères alphanumériques possibles, en association avec
- un deuxième champ contenant un identifiant de terminal et/ou de personne et/ou de requête, et en association avec
- un troisième champ contenant une première valeur de somme d'argent associée à la sélection présente dans le premier champ,

la machine effectuant une opération d'enregistrement de la sélection contenue dans la requête sur réception d'un message de paiement contenant l'identifiant et correspondant à la valeur de somme d'argent présente dans le troisième champ de la requête,
**caractérisé en ce que**
N requêtes, dont les premières valeurs de somme d'argent sont toutes égales à une même deuxième valeur prescrite dans leur troisième champ et qui proviennent de plusieurs terminaux différents, sont envoyées à au moins un serveur intermédiaire comportant au moins une première interface de communication avec les terminaux, la première interface recevant les N requêtes, N étant un entier naturel prescrit, supérieur ou égal à deux,

le serveur intermédiaire comportant un module de regroupement des sélections des N requêtes dans un message de groupe stocké dans une mémoire,
chaque message de groupe comprenant :
- N quatrièmes champs contenant chacun respectivement la sélection contenue dans le premier champ des N requêtes, en association avec
- N cinquièmes champs contenant chacun respectivement l'identifiant contenu dans le deuxième champ des N requêtes,
- un sixième champ contenant une troisième valeur de somme d'argent égale à N fois la deuxième valeur prescrite,

le serveur intermédiaire comportant au moins une deuxième interface de communication avec la machine pour envoyer le message de groupe à la machine d'enregistrement.

Grâce à l'invention, les sélections sont envoyées en un groupe dans un message, par exemple unique, à la machine, ce qui évite d'encombrer le réseau et l'interface de réception de la machine. Ainsi, l'invention permet d'envoyer une requête à plusieurs, tout en conservant la correspondance entre chaque sélection du groupe et la personne ayant fait cette sélection. L'invention permet une compression judicieuse du volume des données (sans utilisation de logiciel de compression de données), et ce en raison de la structure du message de regroupement.

Suivant un mode de réalisation de l'invention, chaque message de groupe stocke les N sélections, différentes les unes des autres, des N requêtes.

Suivant un mode de réalisation de l'invention, la taille de chaque message de groupe envoyé à la machine d'enregistrement est inférieure à la somme des tailles des N requêtes envoyées des terminaux au serveur intermédiaire.

Suivant un mode de réalisation de l'invention, les N requêtes envoyées des terminaux au serveur intermédiaire font chacune une même taille prescrite.

Suivant un mode de réalisation de l'invention, le premier champ fait une première taille prescrite, le deuxième champ fait une deuxième taille prescrite, chaque quatrième champ fait la première taille prescrite et/ou chaque cinquième champ fait la deuxième taille prescrite.

Suivant un mode de réalisation de l'invention, le troisième champ fait une troisième taille prescrite et le sixième champ fait cette troisième taille prescrite.

Suivant un mode de réalisation de l'invention, les N requêtes sont envoyées par N terminaux différents les uns des autres au serveur intermédiaire.

Un deuxième objet de l'invention est un dispositif pour la mise en oeuvre du procédé de communication tel que décrit ci-dessus, le dispositif comportant au moins un serveur intermédiaire comportant au moins une première interface de communication avec des terminaux d'utilisateurs, pour la réception de N requêtes d'enregistrement d'une information devant être sélectionnée et associée à l'utilisateur en présence d'un paiement des terminaux, chaque requête comprenant :
- un premier champ contenant une sélection de combinaisons de caractères alphanumériques parmi un ensemble prédéterminé et fini de combinaisons de caractères alphanumériques possibles, en association avec
- un deuxième champ contenant un identifiant de terminal et/ou de personne et/ou de requête, et en association avec
- un troisième champ contenant une première valeur de somme d'argent associée à la sélection présente dans le premier champ,
**caractérisé en ce que**
le serveur intermédiaire comporte un module de regroupement des sélections de N requêtes dont les premières valeurs de somme d'argent sont toutes égales à une même deuxième valeur prescrite dans leur troisième champ et qui proviennent de plusieurs terminaux différents, dans un message de groupe stocké dans une mémoire,
chaque message de groupe comprenant :
- N quatrièmes champs contenant chacun respectivement la sélection contenue dans le premier champ des N requêtes, en association avec
- N cinquièmes champs contenant chacun respectivement l'identifiant contenu dans le deuxième champ des N requêtes,
- un sixième champ contenant une troisième valeur de somme d'argent égale à N fois la deuxième valeur prescrite,
N étant un entier naturel prescrit, supérieur ou égal à deux,
le serveur intermédiaire comportant au moins une deuxième interface de communication apte à envoyer le message de groupe à une machine d'enregistrement destinée à effectuer une opération d'enregistrement des sélections.

L'invention sera mieux comprise à la lecture de la description qui va suivre, donnée uniquement à titre d'exemple non limitatif en référence aux dessins annexés, sur lesquels :
- la figure 1 représente schématiquement le procédé de communication mis en oeuvre par l'invention dans un réseau de télécommunication,
- la figure 2 représente schématiquement la structure d'une requête envoyée par un terminal suivant un premier mode de réalisation de l'invention,
- la figure 3 représente schématiquement la structure d'une requête envoyée par un terminal suivant un deuxième mode de réalisation de l'invention,
- la figure 4 représente schématiquement un message de groupe généré par un serveur suivant l'invention,
- la figure 5 représente schématiquement la structure d'un message d'interrogation pouvant apparaître pour chaque requête dans le procédé suivant l'invention,
- la figure 6 représente schématiquement la structure d'un compte d'utilisateur pouvant apparaître dans le procédé suivant l'invention,

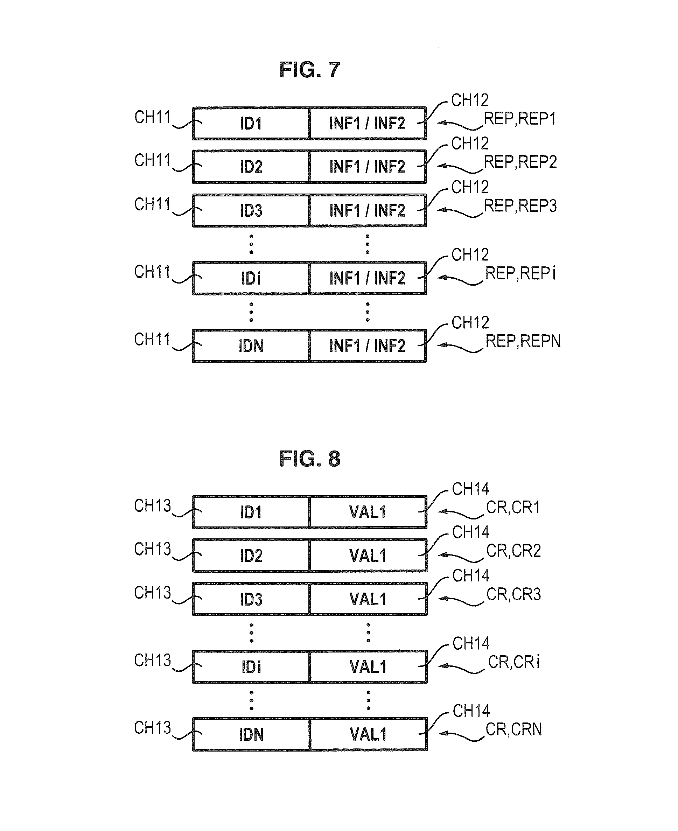

- la figure 7 représente la structure d'un message de réponse suite à une requête, pouvant apparaître dans le procédé suivant l'invention,
- la figure 8 représente schématiquement la structure d'un message de paiement, pouvant apparaître dans le procédé suivant l'invention,
- la figure 9 représente schématiquement la structure d'un message d'inscription, pouvant apparaître dans le procédé suivant l'invention,
- la figure 10 représente schématiquement la structure d'un autre compte d'utilisateur pouvant apparaître dans le procédé suivant l'invention,
- la figure 11 représente schématiquement l'envoi du message d'inscription de la figure 9.

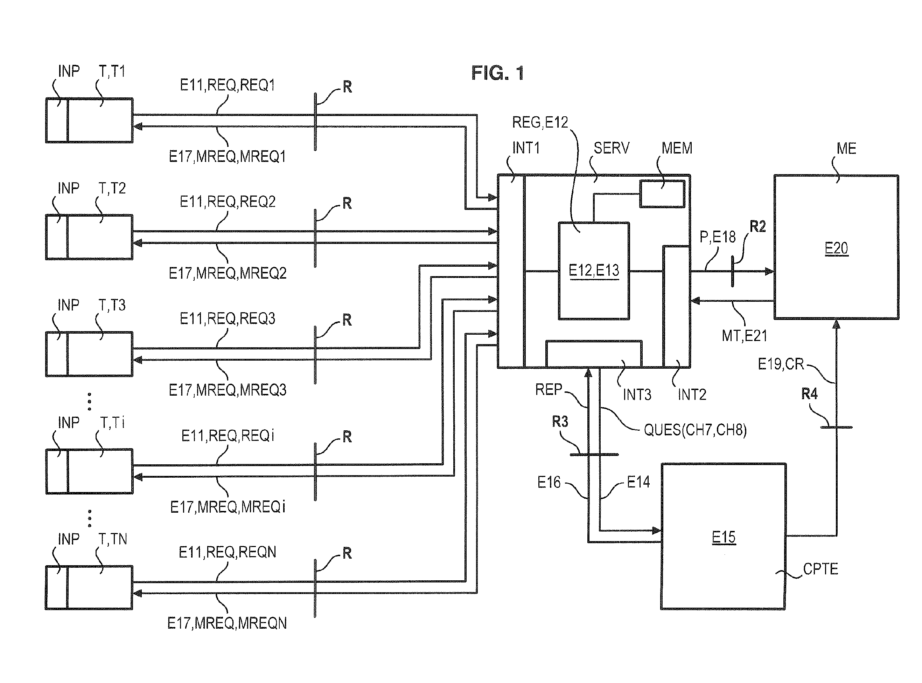

A la figure 1, au moins un terminal T de télécommunication d'au moins un utilisateur est prévu pour communiquer par au moins un réseau R de télécommunication avec une machine ME d'enregistrement. Le terminal T de télécommunication peut être par exemple un téléphone, un téléphone mobile, un ordinateur ou autres. Chaque terminal T comporte un moyen pour émettre au cours d'une première étape E11 au moins une requête REQ d'enregistrement d'une information devant être sélectionnée et associée à l'utilisateur en présence d'un paiement. Ainsi, cette requête REQ peut être par exemple une commande d'un produit et/ou service ou autres, ou une réservation d'un produit et/ou service ou autres. Il est prévu plusieurs terminaux T, à savoir les terminaux d'utilisateurs T1, T2, T3, ..., Ti, ..., TN, distincts entre eux, c'est-à-dire par exemple ayant une adresse, IP ou autres, différente entre eux.

Il est ainsi par exemple prévu N terminaux T, où N est un entier naturel prescrit, supérieur ou égal à 2. Les N terminaux d'utilisateurs T1, T2, T3, ..., Ti, ..., TN envoient respectivement les requêtes REQ1, REQ2, REQ3, ..., REQi, ..., REQN à au moins un serveur intermédiaire SERV comportant au moins une interface INT1 de communication avec ces terminaux T (i est un entier naturel supérieur ou égal à 1 et inférieur ou égal à N).

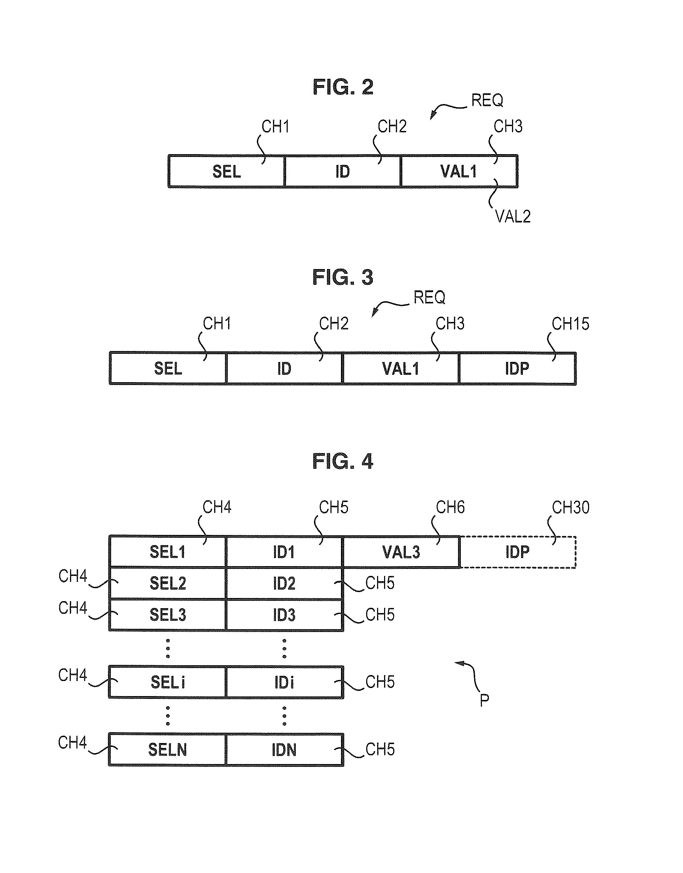

Dans le mode de réalisation de la figure 2, chaque requête REQ comporte :
- un premier champ CH1 contenant une sélection SEL de combinaisons de caractères alphanumériques parmi un ensemble prédéterminé et fini de combinaisons de caractères alphanumériques possibles, en association avec
- un deuxième champ CH2 contenant un premier identifiant ID de terminal T et/ou de personne et/ou de requête REQ, en association avec
- un troisième champ CH3 contenant une première valeur VAL1 de somme d'argent associée à la sélection SEL présente dans le premier champ CH1.

Chaque terminal T comporte des moyens INP d'entrée ou de saisie permettant à l'utilisateur de choisir les caractères alphanumériques qu'il souhaite et d'entrer ces caractères alphanumériques parmi l'ensemble prédéterminé des caractères alphanumériques, pour former la sélection SEL, la première valeur VAL1 de somme d'argent et éventuellement l'identifiant ID, pour former la requête REQ.

L'ensemble prédéterminé et fini de combinaisons de caractères alphanumériques possibles est formé par des combinaisons possibles de ces caractères alphanumériques, parmi lesquelles l'information devant être enregistrée peut être sélectionnée. Cet ensemble prédéterminé et fini de combinaisons possibles de caractères alphanumériques est par exemple limité par le nombre possible des caractères alphanumériques, par exemple limité à une valeur maximum fixe prescrite. Par conséquent, la sélection SEL correspond à un certain nombre de caractères alphanumériques, parmi ceux possibles, qui est inférieur ou égal à ce nombre fixe prescrit.

Les N requêtes REQ sont envoyées au serveur intermédiaire SERV par l'intermédiaire d'au moins un réseau R de télécommunication, l'interface INT1 du serveur SERV étant apte à recevoir ces requêtes REQ par ce réseau R de télécommunication.

Les premières valeurs VAL1 de somme d'argent présentes dans le troisième champ CH3 des requêtes REQ sont toutes égales à une même deuxième valeur prescrite VAL2. On a donc VAL1 = VAL2. Par conséquent, les N requêtes REQ provenant de terminaux T différents ont la même deuxième valeur prescrite VAL2 de somme d'argent dans leur troisième champ CH3. Cette deuxième valeur VAL2 correspond donc à des produits ou services ou prestations ayant tous le même prix et devant être commandés ou réservés par l'envoi des requêtes REQ. L'invention s'applique donc à de tels produits ou services ou prestations ayant donc un même prix dans chaque requête REQ. Les caractères alphanumériques peuvent comprendre par exemple des chiffres et/ou des lettres.

Le serveur intermédiaire SERV comporte un module REG de regroupement des sélections SEL des N requêtes REQ dans un message P de groupe stocké dans une mémoire MEM.

Le module REG de regroupement comporte des moyens pour analyser les N requêtes reçues sur l'interface INT1, pour extraire de ces N requêtes les champs CH1, CH2, CH3 et pour mettre en forme le message P de groupe de la manière suivante.

Chaque message de groupe P comprend, ainsi que cela est représenté à la figure 4 :
- N quatrièmes champs CH4 contenant chacun respectivement la sélection SEL contenue dans le premier champ CH1 des N requêtes REQ,
- N cinquièmes champs CH5 contenant chacun respectivement l'identifiant ID contenu dans le deuxième champ CH2 des N requêtes REQ,
- un sixième champ CH6 contenant une troisième valeur VAL3 de somme d'argent égale à N fois la deuxième valeur prescrite VAL2.

On a ainsi VAL3 = N x VAL2 = N x VAL1.

Les N quatrièmes champs CH4 du message P de groupe sont associés aux N cinquièmes champs CH5 de ce message P de groupe, comme dans les requêtes REQ pour leurs champs CH1 et CH2. Il est par exemple prévu un seul sixième champ CH6.

Le serveur intermédiaire SERV génère le message P de groupe à partir des N requêtes REQ lors d'une deuxième étape E12.

Le message P de groupe comprend ainsi :
- la sélection SEL1 présente dans le quatrième champ CH4, associée à l'identifiant ID1 dans le cinquième champ CH5, qui étaient présents dans respectivement le premier champ CH1 de la requête REQ1 envoyée par le terminal T1 d'utilisateur et dans le deuxième champ CH2 de la requête REQ1 envoyée par le terminal T1 d'utilisateur ;
- la sélection SEL2 présente dans le quatrième champ CH4, associée à l'identifiant ID2 dans le cinquième champ CH5, qui étaient présents dans respectivement le premier champ CH1 de la requête REQ2 envoyée par le terminal T2 d'utilisateur et dans le deuxième champ CH2 de la requête REQ2 envoyée par le terminal T2 d'utilisateur ;
- la sélection SEL3 présente dans le quatrième champ CH4, associée à l'identifiant ID3 dans le cinquième champ CH5, qui étaient présents dans respectivement le premier champ CH1 de la requête REQ3 envoyée par le terminal T3 d'utilisateur et dans le deuxième champ CH2 de la requête REQ3 envoyée par le terminal T3 d'utilisateur ;
- ... ;
- la sélection SELi présente dans le quatrième champs CH4, associée à l'identifiant IDi dans le cinquième champ CH5, qui étaient présents dans respectivement le premier champ CH1 de la requête REQi envoyée par le terminal Ti d'utilisateur et dans le deuxième champ CH2 de la requête REQi envoyée par le terminal Ti d'utilisateur ;
- ... ;
- la sélection SELN présente dans le quatrième champ CH4, associée à l'identifiant IDN dans le cinquième champ CH5, qui étaient présents dans respectivement le premier champ CH1 de la requête REQN envoyée par le terminal TN d'utilisateur et dans le deuxième champ CH2 de la requête REQN envoyée par le terminal TN d'utilisateur.

Le serveur intermédiaire SERV comporte au moins une deuxième interface INT2 de communication avec la machine ME d'enregistrement pour envoyer, au cours d'une huitième étape E18, le message de groupe P à la machine ME d'enregistrement. Ce message P de groupe est envoyé à la machine ME d'enregistrement par l'intermédiaire d'au moins un réseau de R2 de télécommunications, pouvant être identique ou différent du réseau R.

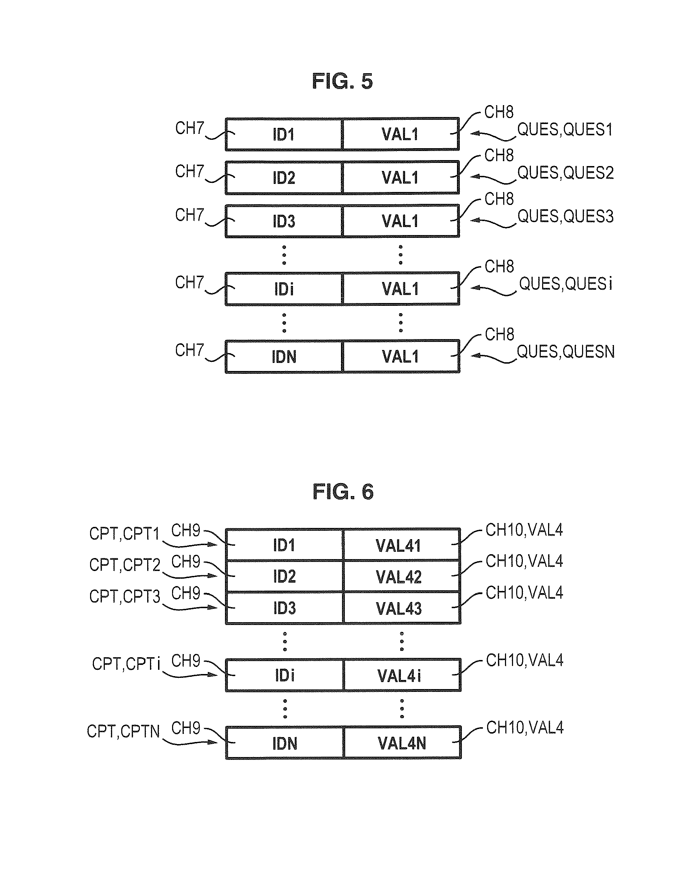

Dans un mode de réalisation, ainsi que cela est représenté à la figure 5, le serveur intermédiaire SERV génère, lors de l'étape E13, pour chaque requête REQ reçue sur son interface INT1, un message correspondant QUES d'interrogation, comportant un septième champ CH7 contenant l'identifiant ID contenu dans le premier champ CH1 de cette requête REQ reçue et un huitième champ contenant une information de demande de valeur d'un compte de l'utilisateur associé à cet identifiant ID, ce huitième champ CH8 du message QUES d'interrogation comportant en outre la première valeur VAL1 de somme d'argent présente dans le troisième champ CH3 de la requête REQ reçue. Le serveur intermédiaire SERV ayant reçu les requêtes REQ1, REQ2, REQ3, ..., REQi, ..., REQN génère donc les messages correspondants QUES1, QUES2, QUES3, ..., QUESi, ..., QUESN, comportant respectivement l'identifiant correspondant ID1, ID2, ID3, ..., IDi, ..., IDN contenu dans le premier champ CH1 de cette requête REQ, et le huitième champ CH8 de ce message QUES d'interrogation, qui contient l'information d'interrogation de valeur de compte et la première valeur VAL1 de somme d'argent présente dans le troisième champ CH3 de la requête REQ1, REQ2, REQ3, ..., REQi, ..., REQN reçue.

Dans un mode de réalisation, le serveur intermédiaire SERV comporte une troisième interface INT3 de communication avec au moins un autre deuxième serveur extérieur CPTE de gestion de comptes d'utilisateur, comportant une mémoire dans laquelle est enregistré, pour chaque utilisateur, le compte CPT d'utilisateur comportant un neuvième champ CH9 contenant l'identifiant ID de terminal et/ou de personne et/ou de requête, c'est-à-dire l'identifiant ID de l'utilisateur du terminal T en association avec un dixième champ CH10 comportant une quatrième valeur VAL4 de somme d'argent restante sur ce compte CPT d'utilisateur. Le serveur CPT garde ainsi enregistrés, ainsi que cela est représenté à la figure 6 :
- le compte CPT1 comportant l'identifiant ID1 du terminal T1 dans le neuvième champ CH9 en association avec la quatrième valeur VAL41 de somme d'argent restante sur ce compte dans le dixième champ CH10,
- le compte CPT2 comportant l'identifiant ID2 du terminal T2 dans le neuvième champ CH9 en association avec la quatrième valeur VAL42 de somme d'argent restante sur ce compte dans le dixième champ CH10,
- le compte CPT3 comportant l'identifiant ID3 du terminal T3 dans le neuvième champ CH9 en association avec la quatrième valeur VAL43 de somme d'argent restante sur ce compte dans le dixième champ CH10,
- ...,
- le compte CPTi comportant l'identifiant IDi du terminal Ti dans le neuvième champ CH9 en association avec la quatrième valeur VAL4i de somme d'argent restante sur ce compte dans le dixième champ CH10,
- ...,
- le compte CPTN comportant l'identifiant IDN du terminal TN dans le neuvième champ CH9 en association avec la quatrième valeur VAL4N de somme d'argent restante sur ce compte dans le dixième champ CH10.

Dans un mode de réalisation, lors de l'étape E14, le serveur SERV envoie par sa troisième interface INT3 le message QUES d'interrogation au deuxième serveur extérieur CPTE de gestion de comptes par l'intermédiaire d'un troisième réseau R3 de télécommunication, pouvant être identique ou différent du premier réseau R et du deuxième réseau R2. Ce message QUES d'interrogation peut être envoyé bien entendu à des instants différents pour les différents terminaux T.

Le deuxième serveur extérieur CPTE de gestion de comptes est par exemple associé à la machine ME d'enregistrement.

Dans un mode de réalisation, lors de l'étape E15, pour chaque message QUES d'interrogation reçu par le deuxième serveur extérieur CPTE de gestion de comptes, ce deuxième serveur CPTE de gestion de comptes d'utilisateur interroge sa mémoire pour envoyer au premier serveur intermédiaire SERV un message REP de réponse, comportant dans un onzième champ CH11 l'identifiant ID présent dans le septième champ CH7 du message QUES d'interrogation reçu et dans un douzième champ CH12 soit une première information INF1 de validation, soit une deuxième information INF2 d'invalidation. Le deuxième serveur CPTE de gestion de comptes comporte un moyen pour comparer la première valeur VAL1 de somme d'argent présente dans le huitième champ CH8 du message QUES d'interrogation à la quatrième valeur VAL4 de somme d'argent présente dans le dixième champ CH10 du compte d'utilisateur CPT ayant le même identifiant ID dans son neuvième champ CH9 que l'identifiant ID présent dans le septième champ CH7 de ce message QUES d'interrogation, pour :
- dans le cas où cette première valeur VAL1 présente dans le huitième champ CH8 du message QUES d'interrogation est inférieure ou égale à la quatrième valeur VAL4 présente dans le dixième champ CH10 du compte CPT, insérer la première information INF1 de validation dans le douzième champ CH12 du message REP de réponse, et
- dans le cas où cette première valeur VAL1 présente dans le huitième champ CH8 du message QUES d'interrogation est supérieure à la quatrième valeur VAL4 présente dans le dixième champ CH10 du compte CPT, insérer la deuxième information INF2 de validation dans le douzième champ CH12 du message REP de réponse. Dans un mode de réalisation, lors de l'étape E16, le deuxième serveur CPTE de gestion de comptes envoie le message REP de réponse au premier serveur intermédiaire SERV, par l'intermédiaire du troisième réseau R3, à la troisième interface INT3. Dans un mode de réalisation, la première information INF1 de validation présente dans le douzième champ CH12 du message REP de réponse valide la requête REQ ayant dans son premier champ CH1 l'identifiant ID présent dans le onzième champ CH11 de ce message REP de réponse.

Dans un mode de réalisation, la deuxième information INF2 d'invalidation présente dans le douzième champ CH12 du message REP de réponse invalide la requête REQ ayant dans son premier champ CH1 l'identifiant ID présent dans le onzième champ CH11 de ce message REP de réponse.

Dans un mode de réalisation, le message de groupe P ne comprend que des sélections SEL associées à des identifiants ID pour chacun desquels il a été reçu un message REP de réponse ayant dans son douzième champ CH12 la première information INF1 de validation associée à cet identifiant ID du onzième champ CH11. Autrement dit, les requêtes REQ invalidées ne sont pas prises en compte dans le message de groupe P, seules des requêtes REQ validées étant prises en compte dans ce message de groupe P.

Dans un mode de réalisation, le premier serveur intermédiaire SERV retransmet, lors d'une étape E17, à chaque terminal T ayant envoyé une requête REQ, un message MREQ comportant soit la première information INF1 de validation présente dans le douzième champ CH12 du message REP de réponse, pour indiquer au terminal T ayant envoyé cette requête REQ que cette requête REQ est validée, soit la deuxième information INF2 d'invalidation présente dans le douzième champ CH12 du message REP de réponse, pour indiquer au terminal T ayant envoyé cette requête REQ que cette requête REQ n'est pas validée.

Par conséquent, dans un mode de réalisation, le premier serveur intermédiaire SERV envoie par sa première interface INT1, en réponse aux requêtes REQ1, REQ2, REQ3, ..., REQi, ..., REQN, les messages MREQ1, MREQ2, MREQ3, ..., MREQi, ..., MREQN respectivement. Bien entendu, ces messages MREQ peuvent être envoyés lors de l'étape E17 à des instants différents.

Par conséquent, dans un mode de réalisation, l'étape E18 d'envoi du message P de groupe du premier serveur intermédiaire SERV à la machine ME d'enregistrement est effectuée lorsque le serveur SERV a reçu un nombre suffisant N de requêtes validées.

Dans un mode de réalisation, suite à l'étape E15, pour chaque requête REQ validée, le compte CPT ayant dans son neuvième champ CH9 l'identifiant ID correspondant à l'identifiant ID du onzième champ CH11 pour lequel la première information de validation INF1 de la requête REQ est présente dans le douzième champ CH12, est diminué dans son dixième champ CH10 de la valeur VAL1 présente dans le message QUES (c'est-à-dire que VAL4 y est diminuée de VAL1). Suite à l'étape E15, pour laquelle la requête REQ a été validée, un autre compte associé à la machine ME d'enregistrement est augmenté de la première valeur VAL1, par exemple par le fait que le message correspondant CR de paiement est envoyé lors de l'étape E19 du deuxième serveur CPTE de gestion de comptes à la machine ME d'enregistrement, par l'intermédiaire d'un quatrième réseau R4 (pouvant être identique ou différent des réseaux R, R2, R3).

Dans un mode de réalisation, chaque message CR de paiement comporte un treizième champ CH13 contenant l'identifiant ID de la requête REQ ayant été validée et un quatorzième champ CH14 contenant la première valeur VAL1 contenue dans le troisième champ CH3 de la requête REQ.

Dans un mode de réalisation, il est donc prévu, respectivement pour les requêtes REQ1, REQ2, REQ3, ..., REQi, ..., REQN, dans le cas où toutes ces requêtes ont été validées :
- pour la requête REQ1 validée le message CR1 de paiement comportant dans un treizième champ CH13 l'identifiant ID présent dans le deuxième champ CH2 de la requête REQ1, en association avec un quatorzième champ CH14 contenant la première valeur VAL1 présente dans le troisième champ CH3 de la requête REQ1,
- pour la requête REQ2 validée le message CR2 de paiement comportant dans un treizième champ CH13 l'identifiant ID présent dans le deuxième champ CH2 de la requête REQ2, en association avec un quatorzième champ CH14 contenant la première valeur VAL1 présente dans le troisième champ CH3 de la requête REQ2,
- pour la requête REQ3 validée le message CR3 de paiement comportant dans un treizième champ CH13 l'identifiant ID présent dans le deuxième champ CH2 de la requête REQ3, en association avec un quatorzième champ CH14 contenant la première valeur VAL1 présente dans le troisième champ CH3 de la requête REQ3,
- ...,
- pour la requête REQi validée le message CRi de paiement comportant dans un treizième champ CH13 l'identifiant ID présent dans le deuxième champ CH2 de la requête REQi, en association avec un quatorzième champ CH14 contenant la première valeur VAL1 présente dans le troisième champ CH3 de la requête REQi,
- ...,
- pour la requête REQN validée le message CRN de paiement comportant dans un treizième champ CH13 l'identifiant ID présent dans le deuxième champ CH2 de la requête REQN, en association avec un quatorzième champ CH14 contenant la première valeur VAL1 présente dans le troisième champ CH3 de la requête REQN.

Dans un mode de réalisation, le message REP de réponse et/ou le message MREQ de réponse et/ou le message CR comporte des informations de facturation pouvant comporter l'identifiant ID associé à la première information INF1 de validation en cas de validation de la requête REQ et/ou des informations indiquant la valeur présente dans le dixième champ CH10 du compte CPT associé à cet identifiant ID (après diminution par la première valeur VAL1) en cas de première information INF1 de validation présente.

Dans un mode de réalisation, à l'étape E20, la machine ME d'enregistrement ayant reçu le message P de groupe et sur réception du message CR de paiement contenant l'identifiant ID contenu dans le champ CH5 du message P de groupe, effectue une opération d'enregistrement des sélections SEL contenues dans le quatrième champ CH4 du message P de groupe.

Dans un mode de réalisation, les N sélections SEL1, SEL2, SEL3, ..., SELi, ..., SELN, présentes dans le quatrième champ CH4 du message P de groupe, sont différentes les unes des autres.

La taille de chaque message de groupe P est ainsi inférieure à la somme des tailles des N requêtes REQ.

Par exemple, les N requêtes REQ envoyées des terminaux T au serveur intermédiaire SERV font chacune une même taille prescrite.

Par exemple, chaque premier champ CH1 fait une première taille prescrite que fait également chaque quatrième champ CH4 et/ou chaque deuxième champ CH2 fait une deuxième taille prescrite que fait également chaque cinquième champ CH5.

Par exemple, chaque troisième champ CH3 fait une troisième taille prescrite que fait également chaque sixième champ CH6.

Dans un mode de réalisation, au cours de l'étape E21, la machine ME d'enregistrement effectue une opération de traitement des sélections SEL reçues et renvoie, suite au message P de groupe reçu du serveur intermédiaire SERV et au message CR de paiement, un message MT de traitement des sélections SEL, ce message MT de traitement indiquant le résultat de cette opération de traitement de ces sélections SEL. Ce message MT de traitement peut ensuite être retransmis par le serveur intermédiaire SERV aux terminaux T.

L'invention permet ainsi de diminuer le volume des données envoyées à la machine ME d'enregistrement, tout en gardant le même nombre de sélections SEL que dans les requêtes individuelles REQ des terminaux T.

Dans le mode de réalisation de la figure 3, chaque requête REQ peut comporter, en plus des premier, deuxième et troisième champs CH1, CH2, CH3, un autre champ CH15 (quinzième champ CH15) contenant une information de sélection d'un deuxième identifiant IDP de groupe. Toutes les sélections SEL et premiers identifiants ID des requêtes REQ (dans la limite de N requêtes) ayant le même identifiant IDP de groupe sont alors enregistrés dans le même message P de groupe associé à cet identifiant IDP de groupe dans un autre champ CH30 de ce message P de groupe.

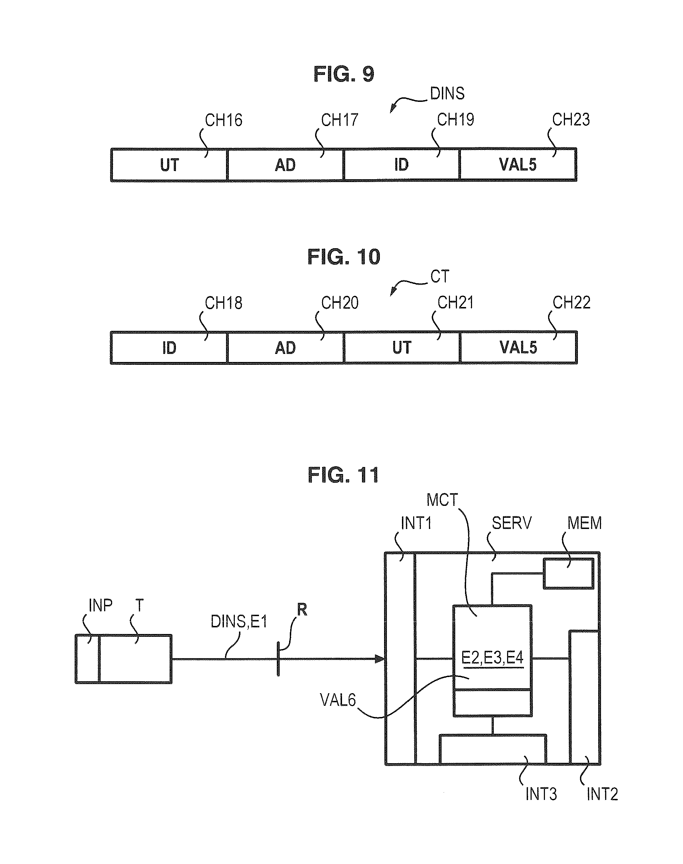

Dans un mode de réalisation, chaque utilisateur s'est au préalable inscrit auprès du premier serveur intermédiaire SERV au cours des étapes décrites ci-dessous aux figures 9, 10 et 11, avant les étapes E11 et suivantes.

Dans un mode de réalisation, au cours de l'étape E1, le terminal T de l'utilisateur envoie au premier serveur intermédiaire SERV un message DINS de demande d'inscription, comportant dans un seizième champ CH16 les coordonnées UT de l'utilisateur (tel que par exemple, nom, prénom, adresse, etc...) et dans un dix-septième champ CH17 son adresse électronique AD (adresse de courriel par exemple), par exemple par le fait que l'utilisateur établit une connexion de son terminal T avec le serveur SERV (avec son interface INT1), par laquelle l'utilisateur effectue sur son terminal T des saisies de caractères alphanumériques pour remplir les champs CH16, CH17 et/ou autres, prescrits par ce serveur SERV (par exemple champs d'un formulaire électronique) pour envoyer ce message DINS de demande d'inscription.

Dans un mode de réalisation, le premier serveur intermédiaire SERV ayant reçu le message DINS de demande d'inscription peut procéder lors d'une étape E2 à une vérification pour vérifier si l'adresse électronique AD présente dans ce message DINS est valide (par exemple en renvoyant un message de demande de confirmation au terminal T, demandant à l'utilisateur d'y répondre par cette adresse électronique, ou par le fait que le message DINS de demande d'inscription doit comporter deux saisies identiques de cette adresse électronique, dont le serveur SERV vérifie qu'elles ont bien identiques).

Dans un mode de réalisation, une fois le message DINS reçu par le serveur SERV et cette vérification éventuellement effectuée, le serveur SERV enregistre lors de l'étape E3 dans sa mémoire MEM un deuxième compte CT d'utilisateur comportant un dix-huitième champ CH18 contenant l'identifiant ID (cet identifiant ID pouvant être créé par le serveur SERV).

Dans un mode de réalisation, cet identifiant ID a été par exemple choisi dans un dix-neuvième champ CH18 de la demande d'inscription DINS par l'utilisateur sur son terminal T. Dans un autre mode de réalisation, l'identifiant peut être l'adresse AD ou les coordonnées UT de l'utilisateur, que l'utilisateur connait donc (dans sa demande DINS d'inscription qu'il a envoyée).

Dans un mode de réalisation, il est enregistré dans le compte CT du serveur SERV, en association avec l'identifiant ID contenu dans le champ CH18, l'adresse AD dans un vingtième champ CH20 et/ou les coordonnées UT de l'utilisateur dans un vingt-et-unième champ CH21.

Dans un mode de réalisation, l'exécution des étapes E12 et suivantes par le serveur intermédiaire SERV peut être soumise au fait qu'au moins l'identifiant ID présent dans le deuxième champ CH2 de la requête REQ reçue à l'étape E11 par le serveur SERV est également présent dans le seizième champ CH16 du compte CT d'utilisateur de ce serveur intermédiaire, le serveur SERV vérifiant cela au cours d'une étape E4.

Dans un mode de réalisation, le serveur enregistre lors de l'étape E3 dans sa mémoire MEM le deuxième compte CT d'utilisateur comportant le seizième champ CH16 contenant l'identifiant ID (cet identifiant ID pouvant être créé par le serveur SERV) en association avec un vingt-deuxième champ CH22 contenant une cinquième valeur VAL5 de somme d'argent, issue d'une opération préalable de paiement correspondant à cette valeur VAL5, effectué par le terminal T auprès du serveur SERV. Cette opération préalable de paiement est exécutée par exemple par l'envoi d'un message préalable de paiement du terminal T au serveur SERV, indiquant le paiement de cette valeur VAL5 en association avec l'identifiant ID de l'utilisateur et/ou l'adresse AD de l'utilisateur et/ou les coordonnées UT de l'utilisateur, ce message de paiement pouvant être envoyé lors de l'inscription (et faire partie alors du message DINS, qui comporte alors au moins un vingt-troisième champ CH23 de paiement contenant cette valeur VAL5) ou à tout moment ultérieurement, une fois le compte CT enregistré dans le serveur SERV. Ainsi, dans ce mode de réalisation, l'exécution des étapes E12 et suivantes par le serveur intermédiaire SERV peut être soumise au fait qu'au moins l'identifiant ID présent dans le deuxième champ CH2 de la requête REQ reçue à l'étape E11 par le serveur SERV est également présent dans le seizième champ CH16 du compte d'utilisateur de ce serveur intermédiaire et par le fait que le champ CH22 du compte CT possède une valeur VAL5 suffisante, c'est-à-dire supérieure ou égale une sixième valeur prescrite VAL6 de somme d'argent, le serveur SERV vérifiant cela au cours de l'étape E4.

Dans un mode de réalisation, une fois le deuxième compte CT d'utilisateur enregistré dans le premier serveur SERV, le serveur procède à la création du premier compte CPT d'utilisateur auprès du deuxième serveur extérieur CPTE de gestion de comptes, par son interface INT3.

Dans un mode de réalisation, les étapes E2, E3, E4 sont exécutées par un module MCT de gestion de comptes du serveur SERV.

## Revendications

1. Procédé de communication par au moins un réseau de télécommunication entre au moins un terminal (T) de télécommunication d'au moins un utilisateur et une machine (ME) d'enregistrement, le terminal (T) émettant au moins une requête (REQ) d'enregistrement d'une information devant être sélectionnée et associée à l'utilisateur en présence d'un paiement,
chaque requête (REQ) comprenant :
- un premier champ (CH1) contenant une sélection (SEL) de combinaisons de caractères alphanumériques parmi un ensemble prédéterminé et fini de combinaisons de caractères alphanumériques possibles, en association avec
- un deuxième champ (CH2) contenant un identifiant (ID) de terminal et/ou de personne et/ou de requête, et en association avec
- un troisième champ (CH3) contenant une première valeur (VAL1) de somme d'argent associée à la sélection (SEL) présente dans le premier champ (CH1),
la machine (ME) effectuant une opération d'enregistrement de la sélection contenue dans la requête (REQ) sur réception d'un message (CR) de paiement contenant l'identifiant (ID) et correspondant à la valeur (VAL1) de somme d'argent présente dans le troisième champ (CH3) de la requête (REQ),
**caractérisé en ce que**
N requêtes (REQ), dont les premières valeurs (VAL1) de somme d'argent sont toutes égales à une même deuxième valeur prescrite (VAL2) dans leur troisième champ (CH3) et qui proviennent de plusieurs terminaux différents (T), sont envoyées à au moins un serveur intermédiaire (SERV) comportant au moins une première interface (INT1) de communication avec les terminaux (T), la première interface (INT1) recevant les N requêtes (REQ), N étant un entier naturel prescrit, supérieur ou égal à deux,
le serveur intermédiaire (SERV) comportant un module (REG) de regroupement des sélections (SEL) des N requêtes (REQ) dans un message de groupe (P) stocké dans une mémoire (MEM),
chaque message de groupe (P) comprenant :
- N quatrièmes champs (CH4) contenant chacun respectivement la sélection (SEL) contenue dans le premier champ (CH1) des N requêtes (REQ), en association avec
- N cinquièmes champs (CH5) contenant chacun respectivement l'identifiant (ID) contenu dans le deuxième champ (CH2) des N requêtes (REQ),
- un sixième champ (CH6) contenant une troisième valeur (VAL3) de somme d'argent égale à N fois la deuxième valeur prescrite (VAL2),
le serveur intermédiaire (SERV) comportant au moins une deuxième interface (INT2) de communication avec la machine (ME) pour envoyer le message de groupe (P) à la machine (ME) d'enregistrement.

2. Procédé de communication suivant la revendication 1, **caractérisé en ce que** chaque message de groupe (P) stocke les N sélections (SEL), différentes les unes des autres, des N requêtes (REQ).

3. Procédé de communication suivant l'une quelconque des revendications précédentes, **caractérisé en ce que** la taille de chaque message de groupe (P) envoyé à la machine (ME) d'enregistrement est inférieure à la somme des tailles des N requêtes (REQ) envoyées des terminaux (T) au serveur intermédiaire (SERV).

4. Procédé de communication suivant l'une quelconque des revendications précédentes, **caractérisé en ce que** les N requêtes (REQ) envoyées des terminaux (T) au serveur intermédiaire (SERV) font chacune une même taille prescrite.

5. Procédé de communication suivant l'une quelconque des revendications précédentes, **caractérisé en ce que** le premier champ (CH1) fait une première taille prescrite, le deuxième champ (CH2) fait une deuxième taille prescrite, chaque quatrième champ (CH4) fait la première taille prescrite et/ou chaque cinquième champ (CH5) fait la deuxième taille prescrite.

6. Procédé de communication suivant l'une quelconque des revendications précédentes, **caractérisé en ce que** le troisième champ (CH3) fait une troisième taille prescrite et le sixième champ (CH6) fait cette troisième taille prescrite.

7. Procédé de communication de communication suivant l'une quelconque des revendications précédentes, **caractérisé en ce que** les N requêtes (REQ) sont envoyées par N terminaux (T) différents les uns des autres au serveur intermédiaire (SERV).

8. Dispositif pour la mise en oeuvre du procédé de communication suivant l'une quelconque des revendications précédentes, le dispositif comportant au moins un serveur intermédiaire (SERV) comportant au moins une première interface (INT1) de communication avec des terminaux (T) d'utilisateurs, pour la réception de N requêtes d'enregistrement d'une information devant être sélectionnée et associée à l'utilisateur en présence d'un paiement des terminaux (T),
chaque requête (REQ) comprenant :
- un premier champ (CH1) contenant une sélection (SEL) de combinaisons de caractères alphanumériques parmi un ensemble prédéterminé et fini de combinaisons de caractères alphanumériques possibles, en association avec
- un deuxième champ (CH2) contenant un identifiant (ID) de terminal et/ou de personne et/ou de requête, et en association avec
- un troisième champ (CH3) contenant une première valeur (VAL1) de somme d'argent associée à la sélection (SEL) présente dans le premier champ (CH1),
**caractérisé en ce que**
le serveur intermédiaire (SERV) comporte un module (REG) de regroupement des sélections (SEL) de N requêtes (REQ) dont les premières valeurs (VAL1) de somme d'argent sont toutes égales à une même deuxième valeur prescrite (VAL2) dans leur troisième champ (CH3) et qui proviennent de plusieurs terminaux différents (T), dans un message de groupe (P) stocké dans une mémoire (MEM),
chaque message de groupe (P) comprenant :
- N quatrièmes champs (CH4) contenant chacun respectivement la sélection (SEL) contenue dans le premier champ (CH1) des N requêtes (REQ), en association avec
- N cinquièmes champs (CH5) contenant chacun respectivement l'identifiant (ID) contenu dans le deuxième champ (CH2) des N requêtes (REQ),
- un sixième champ (CH6) contenant une troisième valeur (VAL3) de somme d'argent égale à N fois la deuxième valeur prescrite (VAL2),
N étant un entier naturel prescrit, supérieur ou égal à deux,
le serveur intermédiaire (SERV) comportant au moins une deuxième interface (INT2) de communication apte à envoyer le message de groupe (P) à une machine (ME) d'enregistrement destinée à effectuer une opération d'enregistrement des sélections (SEL).
